# EUROPÄISCHE PATENTSCHRIFT

(11) **EP 1 013 513 B1**
(45) Veröffentlichungstag und Bekanntmachung des Hinweises auf die Patenterteilung: **23.03.2005**
(21) Anmeldenummer: 99118599.2
(22) Anmeldetag: 21.09.1999
(51) Int. Cl.: B60R 21/13

(54) **Überroll-Schutzvorrichtung für Kraftfahrzeuge**
Roll-over protection device for a motor vehicle
Dispositif pour arceau de sécurité pour des véhicules automobiles

(30) Priorität: 24.12.1998 DE 19860165
(43) Veröffentlichungstag der Anmeldung: 28.06.2000
(73) Patentinhaber: ISE Innomotive Systems Europe GmbH, 51702 Bergneustadt (DE)
(72) Erfinder: Hartebrodt, Raphael, 57489 Drolshagen (DE); Nowack, Reinhard, 57489 Drolshagen (DE); Löwen, Jakob, 51702 Bergneustadt (DE); Latussek, Holger, 51702 Bergneustadt (DE)
(74) Vertreter: Fuchs Mehler Weiss & Fritzsche

(56) Entgegenhaltungen:
- EP-A- 0 657 326
- DE-A- 4 314 538
- DE-A- 4 342 400

## Beschreibung

Die Erfindung bezieht sich auf eine Überroll-Schutzvorrichtung gemäß dem Oberbegriff des Anspruchs 1.

Überroll-Schutzvorrichtungen für Kraftfahrzeuge, insbesondere für Cabriolets, weisen typischerweise einen Überrollkörper, beispielsweise einen U-förmigen Bügel oder einen breiten Profilkörper, auf, der im Überschlagfall aus einer abgesenkten Ruhelage in eine über die Fahrzeugbrüstung nach oben überstehende Stützlage selbsttätig ausfahrbar ist. Als Ausfahrantrieb dient typischerweise eine Druckfeder, die in Wirkverbindung mit dem Überrollkörper steht, die in der Ruhelage vorgespannt ist und in dieser Stellung durch eine Verriegelungsanordnung gehalten wird.

Diese Verriegelungsanordnung steht wiederum in mechanischer Wirkverbindung mit einem Auslöser; auch als Aktuator bezeichnet, der beispielsweise durch einen sogenannten Crash-Magneten oder einen pyrotechnischen Auslöser gebildet werden kann, und der einen Betätigungs-Stift aufweist. Dabei kann der Aktuator so ausgebildet sein, daß der Betätigungs-Stift Teil der Verriegelung ist und im Überschlagfall, aktiviert durch einen entsprechenden Sensor, unter Aufhebung der Verriegelung eingezogen wird, oder daß alternativ der Betätigungs-Stift im Überschlagfall ausgestoßen wird und dabei eine Klinke der Verriegelungsanordnung entklinkt. Diese Alternative ist die typische, weil in der Praxis überwiegend vorgesehene Verriegelungsanordnung.

Die Verriegelungsanordnung hat daher generell die Funktion, den ausfahrbaren Überrollkörper in der eingefahrenen Position (Ruhelage) zu halten und im Überschlagfall freizugeben.

So zeigt die gattungsgemäße DE 43 42 400 A 1 einen Überrollbügel, bei dem in einem Führungsblock für den U-förmigen Überrollbügel ein federvorgespannter, schwenkbarer Rasthebel gelagert ist, der einen hakenförmigen Fortsatz besitzt, welcher mit einem Haltestift in Wirkverbindung steht, der an einer schwenkbaren Haltegabel befestigt ist, die wiederum über einen Gabelhalter und eine Schelle mit dem Basisschenkel des Überrollbügels verbunden ist. In der Ruhelage umfaßt der hakenförmige Fortsatz den Haltestift und hält den Überrollbügel gegen die Kraft der vorgespannten Feder unten. Im Überschlagfall wird der Rasthebel unter Aufhebung des Wirkeingriffes mit dem Haltestift durch den Aktuator verschwenkt, so daß die Druckfeder den Überrollbügel in seine Stützlage ausfährt.

Eine weitere Konstruktion für die beschriebene typische alternative Verriegelungsanordnung zeigt die DE 43 14 538 C 2. Bei dieser Ausführungsform ist ein hakenförmiger Halteriegel an einer fahrzeugfesten Haltekonsole schwenkbar gelagert, der in Wirkverbindung mit einem Querstift steht, der an einer Haltewippe gehaltert ist, die wiederum über einen Haltebock mit einem Querjoch des U-förmigen Überrollbügels verbunden ist. In der Ruhelage umfaßt der Halteriegel den Querstift und hält den Überrollbügel unten. Im Überschlagfall verschwenkt ein sensorgesteuerter Aktuator den Halteriegel, der dabei den Querstift freigibt, so daß der vorgespannte Federantrieb den Bügel nach oben ausfahren kann.

Beide vorbeschriebenen Konstruktionen haben, wie alle anderen bekannten Konstruktionen mit einem schwenkbaren Verriegelungshebel, den Nachteil, daß der Aufbau der Verriegelungsanordnung relativ komplex ist und auch eine Reihe von Bauteilen benötigt. Verursacht ist dies im wesentlichen durch das konstruktionsbedingt notwendige, zudem schwenkbare Zwischenglied, das insbesondere eine gesonderte Schwenklagerung erforderlich macht.

Der Erfindung liegt die Aufgabe zugrunde, die eingangs bezeichnete Überroll-Schutzvorrichtung für Kraftfahrzeuge, mit einem Überrollkörper, der im Überschlagfall aus einer abgesenkten Ruhelage in eine über die Fahrzeugbrüstung nach oben überstehende Stützlage selbsttätig ausfahrbar ist, mit mindestens einer Druckfeder, die als Ausfahrantrieb in Wirkverbindung mit dem Überrollkörper steht,und mit einer Verriegelungsanordnung für den Überrollkörper, die diesen in der Ruhelage bei vorgespannter Druckfeder hält und die mit einem, einen Betätigungs-Stift aufweisenden Auslöser in mechanischer Wirkverbindung steht, derart, daß dieser im Überschlagfall die Verriegelung löst, so auszubilden, daß einmal der Aufbau der Verriegelungsanordnung vereinfacht wird und zum anderen weniger Bauteile benötigt werden.

Die Lösung dieser Aufgabe gelingt gemäß der Erfindung dadurch, daß die Verriegelungsanordnung aus einer einseitig eingespannten, elastisch biegsamen und mit dem Betätigungs-Stift in mechanischer Wirkverbindung stehenden, zungenartigen Klinke mit einem Schnapphaken und aus einer mit dem Schnapphakten in der Ruhelage in mechanischem Wirkeingriff tretenden Öffnung in einem benachbarten Halteteil besteht, wobei entweder die Klinke oder das Halteteil mit dem Überrollkörper verbunden ist und die jeweils andere Komponente fahrzeugfest angeordnet ist.

Durch die erfindungsgemäßen Maßnahmen ist es möglich, eine Verriegelungsanordnung zu schaffen, die einfach im Aufbau ist, nur wenige Bauteile benötigt und sich selbsttätig beim Zurückfahren in die Ruhelage nach einer Auslösung verriegelt. Die erfindungsgemäße Verriegelungsanordnung erfordert insbesondere kein Zwischenglied in der Auslösekette, insbesondere kein Drehlager für einen Dreh-Klinkenhebel.

Gemäß einer Weiterbildung der Erfindung ist die Überroll-Schutzvorrichtung, ausgebildet als U-förmiger Überrollbügel mit einem Führungsblock zur Führung der Seitenschenkel des U-förmigen Überrollbügels, so ausgebildet, daß die zungenartige Klinke schellenartig an dem beide Seitenschenkel zu einem U verbindenden Basisschenkel befestigt ist, und die Öffnung in dem Führungsblock ausgebildet ist. Eine derartige Konstruktion ermöglicht eine besonders einfache und sichere Anordnung der Teile der Verriegelungsanordnung.

Es ist jedoch auch denkbar, die Anordnung umgekehrt zu treffen, d.h. die Klinke an dem Führungsblock fahrzeugfest einseitig einzuspannen und die Öffnung für den Rasthaken an dem ausfahrbaren Überrollbügel, z.B. an einem Quersteg desselben, anzubringen.

Um einen sicheren Wirkeingriff mit dem Betätigungsstift des Auslösers zu erhalten, ist gemäß einer Ausgestaltung der Erfindung an der zungenartigen Klinke an deren freiem Ende eine Kröpfung für den Wirkeingriff mit dem Betätigungs-Stift des an dem Führungsblock angebrachten Auslösers ausgebildet.

Gemäß einer Weiterbildung der Erfindung weisen die Öffnung und der Schnapphaken zueinander komplementäre Abschrägungen auf, wodurch gewährleistet ist, daß auch bei auftretenden Erschütterungen bzw. Schwingungen die Verriegelung in der Ruhelage erhalten bleibt.

Für die Ausbildung des Schnapphakens stehen dem Fachmann eine Reihe von Möglichkeiten zur Verfügung. Eine besonders einfache Anordnung läßt sich erzielen, wenn der Schnapphaken als einstückige Aus- oder Anformung an der zungenförmigen Klinke ausgebildet ist.

Weitere Ausgestaltungen und Vorteile der Erfindung ergeben sich anhand von in den Zeichnungen dargestellten Ausführungsbeispielen.

Es zeigen:
- Fig. 1: in einer schematischen Längsschnittdarstellung den Aufbau der erfindungsgemäßen Verriegelungsklinke mit einer am Überrollbügel einseitig eingespannten zungenförmigen Klinke, die einen Rasthaken aufweist, und mit einer dazu komplementären Ausnehmung in dem Führungsblock des Überrollbügels,
- Fig. 2: eine rückwärtige Draufsicht auf das System nach Fig. 1,
- Fig. 3: eine schematische Längsschnittdarstellung entsprechend Fig. 1 mit einer alternativen Einspannung der zungenförmigen Klinke,
- Fig. 4: einen vergrößerten Ausschnitt aus Fig. 3 im Bereich der Verriegelung mit dem Rasthaken, und
- Fig. 5: einen vergrößerten Ausschnitt entsprechend Fig. 4 mit einer alternativen Ausführungsform des Rasthakens.

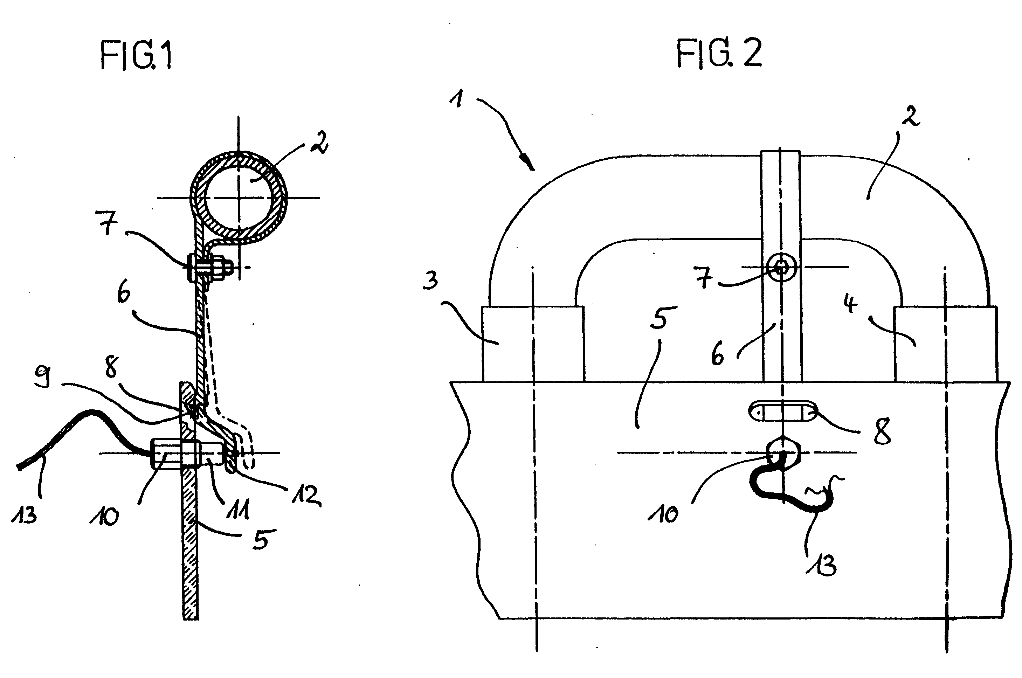

Die Fig. 1 und in Verbindung damit die andere Ansicht nach Fig. 2 zeigen einen Überrollbügel 1 ähnlich demjenigen, der in der eingangs zitierten DE 43 42 400 A 1 dargestellt ist. Dieser U-förmige Überrollbügel, der in der eingefahrenen Position dargestellt ist (Ruhelage), ist aus drei Rohren 2, 3 und 4 zusammengesetzt. Dabei bildet den Basisschenkel des Überrollbügels im wesentlichen ein gekrümmtes Rohr 2, welches an seinen beiden Enden mit zwei Schenkelrohren 3 und 4 durch Schweißen oder andere Verbindungsarten starr verbunden ist. Diese Schenkelrohre 3 und 4 werden auf übliche Weise geführt, typischerweise in Standrohren in Verbindung mit einem fahrzeugfesten Führungsblock 5, so, wie es in der vorgenannten Schrift dargestellt ist und sie enthalten auch typischerweise die Antriebs-Druckfedern.

Diese Ausführungsform des Überrollbügels ist jedoch nur beispielhaft angegeben. Der Überrollkörper des Schutzsystems kann auch eine andere als eine U-förmige Gestalt haben, beispielsweise breite Profilkörper.

Zur besseren Verdeutlichung der Erfindung sind in den Figuren nur die erfindungswesentlichen Teile und die Teile des Überrollkörpers, die damit zusammenwirken, dargestellt. Alle anderen Teile des Überroll-Schutzsystems sind konventionell aufgebaut.

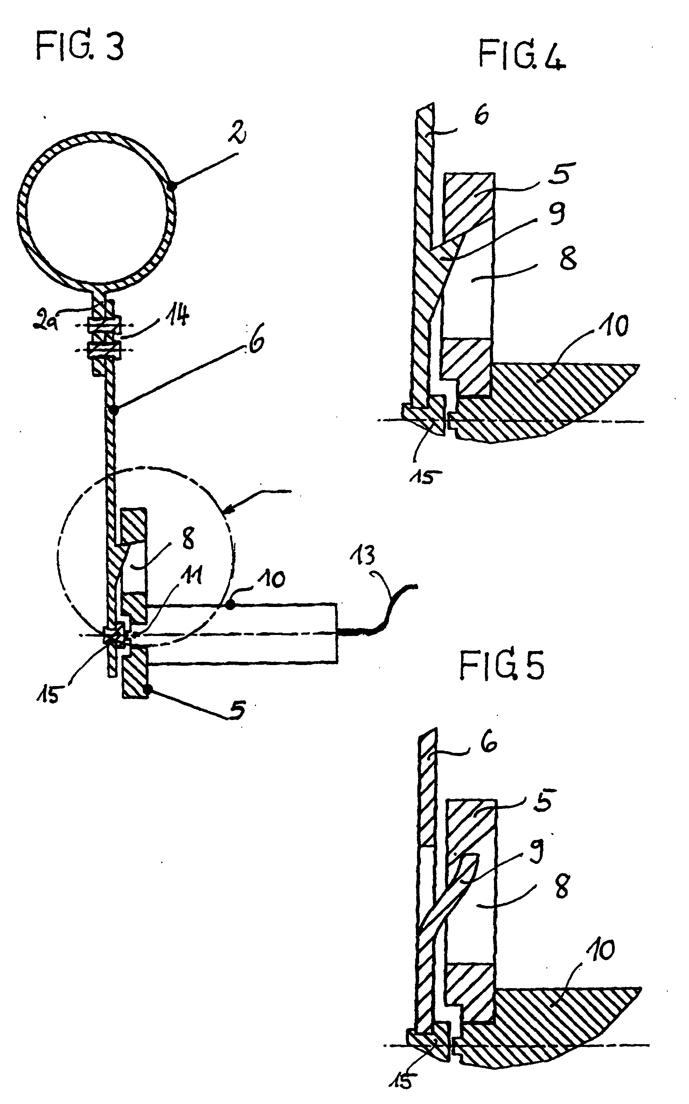

Wesentliches Element der Erfindung ist eine zungenförmige elastisch biegsame Klinke 6, die an einem Ende fest angebracht ist; im dargestellten Ausführungsbeispiel nach Fig. 1 ist sie schellenartig, d.h. formschlüssig, über eine Schraubverbindung 7 mit dem den Basisschenkel bildenden Rohr 2 fest verbunden. Darüber hinaus ist es möglich, die Klinke 6 auch auf andere Weise, z.B. durch Kleben, Schweißen oder Verstiften mechanisch mit dem Rohr 2 oder einem anderen Teil des Überrollbügels zu verbinden. So zeigt beispielsweise die Fig. 3 eine Ausführungsform mit einer als Verbindungslasche ausgebildeten Klinke 6, die über Befestigungselemente 14 mit einem Fortsatz 2 a mit dem Bügel-Rohr 2 befestigt ist.

Die zungenförmige Klinke 6 ist elastisch federnd ausgebildet. Neben der einstückigen Ausführung der Klinke 6 aus einem entsprechenden Material besteht dabei auch die Möglichkeit, die Klinke 6 mehrstückig auszubilden, mit einem elastisch federnden Teilstück.

Die Klinke 6 kann ein Strangpreßteil, z.B. aus Aluminium, oder ein Spritzgußteil aus Kunststoff, oder auch, wie dargestellt, ein Blechteil sein, vorzugsweise hergestellt aus Federstahl oder einem anderen elastischen Werkstoff.

Die Klinke 6 besitzt einen Schnapp- oder Rasthaken 9, der vorzugsweise einstückig an der Klinke 6 ausgeformt ist, z.B. indem ein an drei Seiten aufgetrennter Abschnitt des Blechteiles vorgebogen ist, wie es in der Fig. 5 dargestellt ist. Der Schnapphaken 9 kann auch, wie in Fig. 4 dargestellt, einstückig an der Klinke 6 angeformt sein.

Weitere Ausführungsformen des Schnapphakens 9 sind möglich, je nach Herstellung der Klinke 6.

Die rückwärtige Wand des Führungsblockes 5 weist eine Öffnung 8 auf, in die die Klinke 6 mit ihrem Schnapphaken 9 in der Ruhelage des Überrollbügels 1 eingehakt ist. Um zu gewährleisten, daß der Schnapphaken 9 auch bei Erschütterungen in seiner Verriegelungsstellung bleibt, ist die Wandung der Öffnung 8 nach unten angeschrägt, mit einer entsprechenden komplementären Schräge auf dem Schnapphaken 9.

Unterhalb der Öffnung 8 ist ein stiftausstoßender Auslöser 10 am Führungsblock 5 fest angebracht. Dieser Auslöser 10, der nur symbolisch angedeutet ist, kann durch eine Patrone mit einem pyrotechnischen Zündsatz oder durch ein elektromagnetisches Element in bekannter Weise realisiert werden. Er weist, wie in Fig. 1 näher dargestellt (was entsprechend auch für die Ausführung nach Fig. 3 gilt), einen Stift 11 auf, der an einer Kröpfung 12 (Fig. 1) oder einem separaten Anschlagelement 15 (Fig. 3) der Klinke 6 anliegt.

Der Auslöser 10 wird im Überschlagfall über eine Leitung 13 sensorgesteuert von einem Steuergerät aktiviert, derart, daß der Stift 11 ausgestoßen wird. Dadurch wird die Klinke 6 soweit verschoben (gestrichelt dargestellt), daß der Schnapphaken 9 aus der Öffnung 8 freikommt. Dadurch kann der Überrollbügel 1 mit den vorgespannten Druckfedern in die Stützlage ausfahren.

Nach einer Auslösung ist das System reversierbar, indem der Überrollkörper 1 nach unten gedrückt wird, bis der Schnapphaken 9 wieder in der Öffnung 8 einrastet. Da die zungenförmige Klinke 6 elastisch federnd ausgebildet ist, besitzt sie eine entsprechende Eigen-Rückstellkraft, d.h. der Schnapphaken 9 rastet selbstschließend in der Öffnung 8 ein.

Bei der Ausführungsform nach den Figuren 1 bis 4 ist die zungenartige Klinke 6 mit dem ausfahrbaren Überrollkörper 1 verbunden und die Öffnung 8 in dem fahrzeugfesten Führungsblock 5 ausgebildet. Die Anordnung kann auch umgekehrt getroffen werden, d.h. die zungenartige Klinke 6 kann fahrzeugfest, z.B. an dem Führungsblock 5, befestigt werden und die Öffnung 8 kann in dem ausfahrbaren Überrollkörper 1, z.B. in einem Quersteg, ausgebildet sein.

Bei den Ausführungsformen nach den Fig. 1 und 3, die auch sinngemäß bei der umgekehrten Anordnung angewendet werden kann, ist ein stiftausstoßender Auslöser 10 vorgesehen. Die Anordnung kann auch so getroffen werden, daß ein stifteinziehender Auslöser zur Anwendung kommt, wobei der Stift mit einem entsprechenden hakenförmigen Fortsatz oder dergleichen den Schnapphaken 9 aus der Öffnung 8 zieht bzw. unmittelbar mit dem Schnapphaken 9 selbst versehen ist.

## Patentansprüche

1. Überroll-Schutzvorrichtung für Kraftfahrzeuge, mit einem Überrollkörper (1) der im Überschlagfall aus einer abgesenkten Ruhelage in eine über die Fahrzeugbrüstung nach oben überstehende Stützlage selbsttätig ausfahrbar ist, mit mindestens einer Druckfeder, die als Ausfahrantrieb in Wirkverbindung mit dem Überrollkörper (1) steht, und mit einer Verriegelungsanordnung für den Überrollkörper (9), die diesen in der Ruhelage bei vorgespannter Druckfeder hält und die mit einem, einen Betätigungs-Stift (11) aufweisenden Auslöser (10) in mechanischer Wirkverbindung steht, derart, daß dieser im Überschlagfall die Verriegelung löst, **dadurch gekennzeichnet, daß** die Verriegelungsanordnung aus einer einseitig eingespannten, elastisch biegsamen und mit dem Betätigungs-Stift (11) in mechanischer Wirkverbindung stehenden, zungenartigen Klinke (6) mit einem Schnapphaken (9) und aus einer mit dem Schnapphaken in der Ruhelage in mechanischem Wirkeingriff tretenden Öffnung (8) in einem benachbarten Halteteil (5) besteht, wobei entweder die Klinke (6) oder das Halteteil (5) mit dem Überrollkörper (1) verbunden ist und die jeweils andere Komponente fahrzeugfest angeordnet ist.

2. Überroll-Schutzvorrichtung nach Anspruch 1 mit einem U-förmigen Überrollbügel (2, 3, 4) als Überrollkörper (1) und mit einem fahrzeugfesten Führungsblock (5) zur Führung der Seitenschenkel (3, 4) des U-förmigen Überrollbügels (2, 3, 4), **dadurch gekennzeichnet, daß** die zungenartige Klinke (6) schellenartig an dem beide Seitenschenkel (3, 4) zu einem U verbindenden Basisschenkel (2) befestigt ist, und die Öffnung (8) an dem Führungsblock (5) ausgebildet ist.

3. Überroll-Schutzvorrichtung nach Anspruch 2, **dadurch gekennzeichnet, daß** die zungenartige Klinke (6) am freien Ende eine Kröpfung (12) für den Wirkeingriff mit dem Betätigungs-Stift (11) des an dem Führuhngsblock (5) angebrachten Auslösers (10) aufweist.

4. Überroll-Schutzvorrichtung nach einem der Ansprüche 1 bis 3, **dadurch gekennzeichnet, daß** die Öffnung (8) und der Schnapphaken (9) zueinander komplementäre Abschrägungen aufweisen, die so angelegt sind, daß ein ungewolltes Lösen der Verriegelung durch Erschütterungen bzw. Schwingungen nicht möglich ist.

5. Überroll-Schutzvorrichtung nach einem der Ansprüche 1 bis 4, **dadurch gekennzeichnet, daß** der Schnapphaken (9) als einstückige Aus- oder Anformung an der zungenförmigen Klinke (6) ausgebildet ist.

## Claims

1. A rollover protection device for motor vehicles, comprising a rollover body (1) which in the event of a rollover is automatically extensible from a lowered, resting position into a supporting position which projects upwardly beyond the bodywork of the vehicle, at least one compression spring which, as the extension drive, is in operative connection with the rollover body (1), and a locking arrangement for the rollover body (9), which locking arrangement holds the rollover body in the resting position, with the compression spring pre-loaded, and is in mechanical operative connection with a releaser (10), having an operating pin (11), in such a manner that the releaser (10) releases the lock in the event of a rollover, **characterised in that** the locking arrangement consists of a resiliently flexible tongue-like pawl (6) having a snap-in hook (9), which pawl (6) is fixed at one end and is in mechanical operative connection with the operating pin (11), and of an aperture (8) in an adjacent retaining part (5), which aperture (8) comes into mechanical operative engagement with the snap-in hook in the resting position, either the pawl (6) or the retaining part (5) being connected to the rollover body (1) and the respective other component being fixed to the vehicle.

2. A rollover protection device according to claim 1 having a U-shaped roll bar (2, 3, 4) as the rollover body (1) and having a guide block (5) fixed to the vehicle for guiding the side limbs (3, 4) of the U-shaped roll bar (2, 3, 4), **characterised in that** the tongue-like pawl (6) is fastened in the manner of a band clamp to the base limb (2) which connects the two side limbs (3, 4) to form a "U", and the aperture (8) is formed in the guide block (5).

3. A rollover protection device according to claim 2, **characterised in that** the tongue-like pawl (6) has at the free end a crank (12) for the operative engagement with the operating pin (11) of the releaser (10) mounted on the guide block (5).

4. A rollover protection device according to any one of claims 1 to 3, **characterised in that** the aperture (8) and the snap-in hook (9) have mutually complementary chamfers which are so oriented that unintentional release of the lock due to jolting or vibration is not possible.

5. A rollover protection device according to any one of claims 1 to 4, **characterised in that** the snap-in hook (9) is integrally formed on or out of the tongue-like pawl (6).

## Revendications

1. Dispositif de protection contre le retournement pour des véhicules automobiles, comportant un corps de sécurité (1) qui, en cas de retournement du véhicule, est extractible automatiquement hors d'une position de repos inférieure vers une position d'appui en saillie vers le haut au-delà de la surface d'appui du véhicule, comportant au moins un ressort de pression qui, pour générer le mouvement d'extraction, est en liaison active avec le corps de sécurité (1), et comportant un système de verrouillage (9) du corps de sécurité, qui maintient ce dernier dans la position de repos en présence d'un ressort de pression précontraint et qui est en liaison active avec un organe de déclenchement (10) muni d'un téton de commande (11), de telle sorte que ledit organe de déclenchement désolidarise le verrouillage en cas de tonneau du véhicule, **caractérisé en ce que** le système de verrouillage est formé par un levier à cliquet (6) en forme de lame, qui est bloqué sur un côté, est élastiquement flexible et est en liaison mécanique active avec le téton de commande (11) et qui est muni d'un crochet d'enclenchement (9), et par un orifice (8), ménagé dans un élément de retenue (5) adjacent et entrant en prise mécanique active avec le crochet d'enclenchement dans la position de repos, le levier à cliquet (6) ou l'élément de retenue (5) étant relié au corps de sécurité (1) et l'autre composant respectif étant solidaire du véhicule.

2. Dispositif de protection contre le retournement selon la revendication 1, comportant un arceau de sécurité (2, 3, 4) en forme de U formant le corps de sécurité (1) et comportant un bloc de guidage (5), solidaire du véhicule et destiné à guider les branches latérales (3, 4) de l'arceau de sécurité (2, 3, 4) en forme de U, **caractérisé en ce que** le levier à cliquet (6) en forme de lame est fixé à la manière d'un collier contre la branche de base (2) assemblant en U les deux branches latérales (3, 4), et l'orifice (8) est réalisé au niveau du bloc de guidage (5).

3. Dispositif de protection contre le retournement selon la revendication 2, **caractérisé en ce que** le levier à cliquet (6) en forme de lame comporte sur son extrémité libre un coude (12) pour la liaison active avec le téton de commande (11) de l'organe de déclenchement (10) situé contre le bloc de guidage (5).

4. Dispositif de protection contre le retournement selon l'une quelconque des revendications 1 à 3, **caractérisé en ce que** l'orifice (8) et le crochet d'enclenchement (9) comportent des rampes complémentaires, qui sont conçues de telle sorte que des secousses ou des vibrations ne peuvent pas provoquer une désolidarisation involontaire du verrouillage.

5. Dispositif de protection contre le retournement selon l'une quelconque des revendications 1 à 4, **caractérisé en ce que** le crochet d'enclenchement (9) est conçu sous forme de profilage ou moulage contre le levier à cliquet (6) en forme de lame.
